# FASCICULE DE BREVET EUROPEEN

(11) **EP 1 275 196 B1**
(45) Date de publication et mention de la délivrance du brevet: **04.08.2010**
(21) Numéro de dépôt: 01923787.4
(22) Date de dépôt: 10.04.2001
(51) Int. Cl.: H02P 6/14

(54) **MOTEUR A ANGLE D'AVANCE DE PHASE**
MOTOR MIT PHASENWINKELVORLAUF
MOTOR WITH PHASE ADVANCE ANGLE

(30) Priorité: 18.04.2000 FR 0004986
(43) Date de publication de la demande: 15.01.2003
(73) Titulaire: SEB S.A., 69130 Ecully (FR)
(72) Inventeur: HERRADA, José, F-27200 Vernon (FR); DANCER, Paul, F-42100 Saint-Etienne (FR)
(74) Mandataire: Kiehl, Hubert
(86) Numéro de dépôt international: PCT/FR2001/001099
(87) Numéro de publication internationale: WO 2001/080414

(56) Documents cités:
- DE-A- 19 518 991
- US-A- 4 556 827
- US-A- 5 420 492

## Description

La présente invention concerne les moteurs électriques et leur alimentation, et notamment le réglage du courant par rapport à la tension induite du moteur.

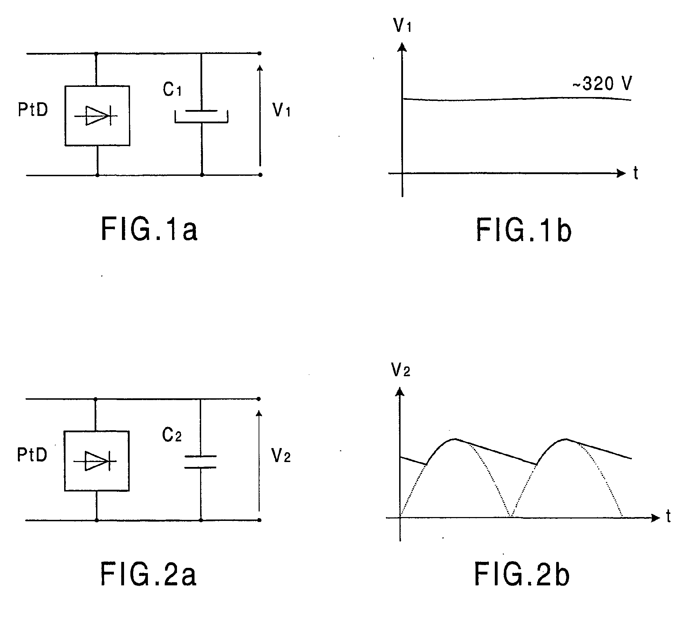

L'excitation des moteurs à commutation électronique est en général élaborée à partir de la tension réseau redressée et filtrée par un pont de diodes PtD suivi d'un condensateur C₁, comme illustré figure 1 a. La tension Vᵢ₁ issue de ce filtre présente généralement peu de fluctuations, comme illustré figure 1b, grâce notamment à la forte valeur de C₁, choisi généralement parmi les condensateurs chimiques.

Pour satisfaire les normes de CEM (compatibilité électromagnétique) concernant la limitation des harmoniques, il est souhaitable de diminuer la valeur du condensateur C₁ à des valeurs se situant dans la gamme des condensateurs plastiques. La figure 2a illustre ce principe, le condensateur C₂ étant un condensateur plastique. Ceci se traduit par une filtration de la tension réseau moins efficace, illustrée figure 2b. La tension V₂ n'est alors plus constante, sa variation étant d'autant plus importante que la valeur de C₂ est faible.

De ce fait l'optimisation du moteur électrique n'est pas simple car le moteur est alimenté sur une plage de tension et non plus selon une valeur sensiblement constante.

Cette particularité amène des comportements gênants dans l'établissement du courant. En effet la dérivée instantanée du courant est proportionnelle à la valeur de la tension. Ainsi, plus la valeur de la tension est faible, plus le courant s'établira lentement.

Ainsi, compte tenu du délai nécessaire pour l'établissement du courant, il est d'usage de réaliser une avance de phase entre la commande du courant et la tension induite du moteur, afin de disposer du maximum de puissance au niveau dudit moteur. La valeur de cette avance de phase est appelée angle d'avance de phase.

Dès lors, lorsque la tension d'entrée est fortement variable, une solution consiste à augmenter l'angle d'avance de la commande du courant par rapport à la force électromotrice du moteur, afin de compenser, pour des faibles valeurs de la tension d'entrée, l'établissement relativement lent du courant.

Ceci nécessite alors, soit un surdimensionnement du moteur pour qu'il accepte les valeurs importantes du courant lorsque la tension est maximale, soit un contrôle du courant, par exemple à l'aide d'un PWM. Ces deux solutions entraînent cependant des coûts importants.

L'angle d'avance de phase constant est déterminé par compromis entre la puissance désirée du moteur et la valeur maximale des pics de courant qui ne doivent pas être supérieurs au courant de démagnétisation.

Il est ainsi connu, par le document US 5 ,420,492, une méthode d'optimisation de l'angle d'avance de phase en mesurant le courant injecté dans les bobinages et en déterminant la position du rotor, l'angle de phase ultérieur étant modifié en fonction du résultat présent. Cet ajustement vise à remédier aux variations de courant liées aux conditions opératoires du moteur, notamment les différentes vitesses de rotation du moteur, ces variations pouvant être également liées au vieillissement de composant et/ou du moteur. Un tel ajustement ne vise toutefois pas à pallier les variations de tension d'alimentation du réseau.

Le but de la présente invention est de remédier aux inconvénients de l'art antérieur en présentant une solution simple pour optimiser au mieux le fonctionnement du moteur lorsque la tension d'alimentation n'est pas constante.

La présente invention est ainsi atteinte à l'aide d'un moteur à commutation électronique suivant la revendication 1.

Ainsi, en modulant l'avance de phase du courant par rapport à la force électromotrice, on permet, non seulement de limiter le courant lorsque la tension d'entrée est importante, mais également d'augmenter ce courant lorsque la tension d'entrée est faible. Il est ainsi possible de faire fonctionner le moteur de façon optimale, en trouvant un point de fonctionnement optimal pour chaque valeur de tension d'entrée. Le rendement du moteur est alors amélioré.

Selon une variante de réalisation, le courant est maintenu à une valeur nulle tant que la tension d'entrée ou le rapport entre la tension d'entrée et la force électromotrice reste inférieur(e) à une valeur prédéterminée. Il peut apparaître en effet comme un meilleur compromis énergétique (au niveau puissance), de ne pas exciter le moteur lorsque la tension d'entrée est faible, plutôt que de l'exciter.

Dès lors, dans cette partie de faible tension d'entrée sans excitation du moteur, il est possible de mesurer la tension induite pour un fonctionnement sans capteur. Dans ces conditions, il n'y a pas de perte en puissance puisqu'il n'y a pas excitation du moteur, la seule condition est de pouvoir mesurer deux passages du signal par zéro d'une des phases, ou de phases différentes.

Par ailleurs, cette adaptation de la valeur de l'avance de phase de la commande du courant par rapport à la force électromotrice du moteur à la tension d'entrée permet de tenir compte, non seulement des variations de tension dans chaque période, mais également des variations de tension d'une période à l'autre ou d'un jour à l'autre, la tension pouvant présenter des variations proches de 20% entre les deux extrêmes.

Ceci permet également de réduire les pulsations à deux fois la fréquence du réseau.

En optimisant l'instant de l'injection du courant par rapport à la force électromotrice du moteur, on diminue également les pertes, donc les échauffements du moteur et des composants de puissance.

Selon l'invention, avantageusement, le condensateur du filtre capacitif est réalisé en une technologie autre que la technologie électrolytique. De préférence, le condensateur est un condensateur polyester.

En effet, en rendant l'avance de phase dépendante de la tension d'entrée Vₑ, cette dernière peut alors présenter de fortes variations sans entraîner de dysfonctionnement, ni de perturbation au niveau du moteur. Il est alors possible de diminuer la valeur du condensateur utilisé dans l'étage de filtration pour le rendre compatible avec les normes CEM, tout en permettant un fonctionnement optimal du moteur. Ainsi, le condensateur utilisé peut être un condensateur plastique tel un condensateur polyester.

Selon un mode de fonctionnement simple, l'angle d'avance de phase varie de façon linéaire et inversement proportionnel avec la tension d'entrée.

Selon un mode de réalisation préféré de l'invention, l'avance de phase est couplée à la valeur de la tension d'entrée par un dispositif analogique.

D'autres modes de réalisation peuvent être envisagés sans sortir du cadre de l'invention, tel un dispositif numérique, discrétisant les différentes tensions présentes. Dans un autre mode de réalisation, l'avance de phase est calculée par un microcontrôleur se synchronisant par le passage par zéro de la tension d'entrée.

La présente invention sera mieux comprise à l'aide de la description qui va suivre, en référence aux figures annexées, parmi lesquelles :
- les figures 1a et 1b présentent l'art antérieur au niveau de la filtration d'entrée d'alimentation du moteur, utilisant un condensateur de forte valeur,
- les figures 2a et 2b présentent un filtrage d'entrée d'alimentation du moteur utilisant un condensateur de faible capacité,
- la figure 3 est une représentation des tensions induites par l'aimant dans les différentes phases du moteur,
- la figure 4 est un exemple particulier du schéma électrique général qui peut alimenter le moteur,
- la figure 5a illustre la notion d'angle d'avance de phase,
- la figure 5b présente, sur un même graphe, les allures : de la tension d'entrée pour une seule phase (uniquement les périodes positives et une période négative), de la tension induite du moteur, ainsi que du courant injecté, pour un angle d'avance de phase constant,
- la figure 6 indique le couple du moteur ainsi que les pertes pour le fonctionnement selon la figure 5b,
- la figure 7 présente l'allure de la tension d'entrée, de la tension induite du moteur, ainsi que du courant injecté, pour un angle d'avance de phase variable,
- la figure 8 indique le couple du moteur ainsi que les pertes pour le fonctionnement selon la figure 7,
- les figures 9a à 9d présentent quelques graphes possibles montrant la relation entre l'avance de phase et la tension d'entrée,
- la figure 10 présente l'un des modes de réalisation de l'avance de l'angle de phase variable,
- la figure 11 explique les différentes tensions dans le mode de réalisation de la figure 10, permettant d'obtenir l'angle d'avance de phase variable,
- la figure 12 présente un graphe des variables similaires à celles illustrées figure 7, dans une variante de réalisation de la présente invention.

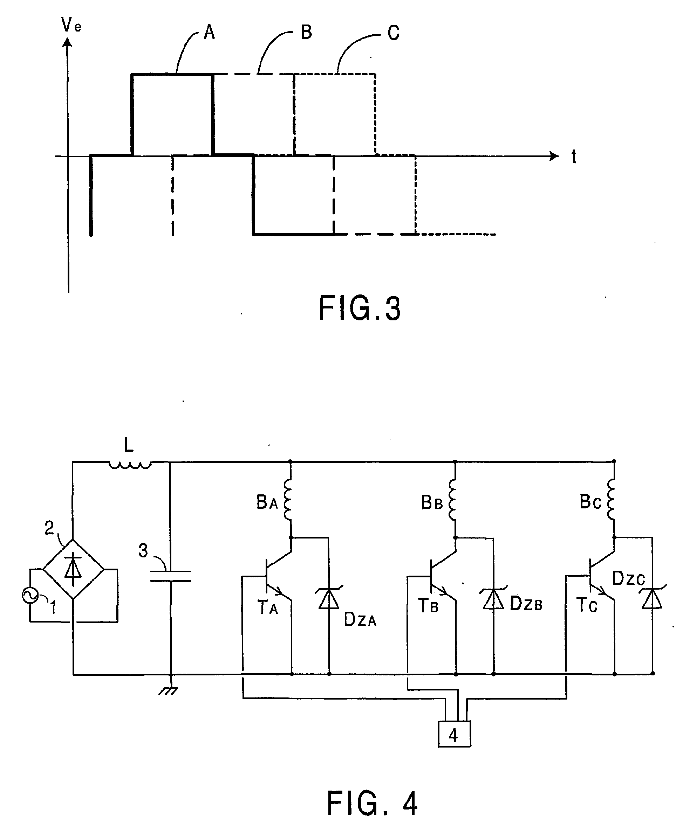

La description se fera, sans être restrictive à l'exemple présenté, sur un moteur triphasé (phases A, B, C) à aimants montés sur le rotor, sans balais collecteurs, communément appelé "brushless DC motor", à commutation électronique, dans le mode de conduction 120° (tension positive ou négative sur une seule phase à la fois), telle que présentée figure 3. Afin de faciliter la compréhension, les phases A, B, C ont été représentées sous leur forme schématique idéalisée, c'est à dire en créneaux.

La commande en courant, unidirectionnelle, est présentée figure 4. Selon le schéma présenté sur cette figure, le moteur est alimenté à partir du réseau d'alimentation alternative 1. Le circuit d'alimentation comprend un pont redresseur 2 qui transforme la tension alternative en tension positive, une inductance L en série (éventuellement nulle) et un condensateur 3, ce filtre capacitif transformant la tension alternative en tension positive.

Afin de respecter les normes CEM, et de limiter les coûts, une variante de réalisation utilise un condensateur 3 de faible valeur, ce qui a pour effet de ne filtrer que faiblement la tension d'entrée.

L'invention couvre également des variantes non décrites dans lesquelles la source d'énergie est une source de tension continue, par exemple constituée d'une batterie qui délivre une tension qui peut varier, notamment en fonction du niveau de décharge.

L'alimentation du moteur est réalisée grâce à trois interrupteurs statiques T_{A}, T_{B}, T_{C}, typiquement des transistors bipolaires, des transistors à effet de champ ou des IGBT. Ces interrupteurs sont commandés par l'intermédiaire d'un circuit de commande 4 approprié.

Dans l'exemple illustré, chaque transistor T_{A}, T_{B}, T_{C} présente son collecteur relié respectivement à l'une des bornes des enroulements B_{A}, B_{B}, B_{C} du moteur. Par ailleurs, chaque transistor présente son émetteur relié à l'une des bornes du condensateur 3 de filtrage, soit directement, soit au travers d'une résistance shunt pour la mesure de courant.

L'autre borne du même enroulement B_{A}, B_{B}, B_{C} du moteur est, quant à elle, connectée à l'autre borne du filtre capacitif 3.

Par ailleurs, les trois interrupteurs statiques présentent en anti-parallèle une diode Zener, respectivement notée Dz_{A}, Dz_{B}, Dz_{C}, active lors des commutations.

En pratique, les diodes Zener peuvent faire l'objet de composants spécifiques montés en anti-parallèle des transistors, ou bien encore être intégrées à l'intérieur des composants constituants les interrupteurs (par exemple composants MOS).

Le ou les capteurs à effet Hall sont fixés sur le stator et détectent le sens du flux magnétique dû à un ou plusieurs aimants portés par le rotor. Ils donnent accès à la connaissance de la positon relative du rotor par rapport au stator, et par conséquence à la connaissance de la tension induite dans chacune des phases.

Il convient alors d'alimenter les parties statoriques afin que l'injection de courant soit synchronisée avec la présence d'une force électromotrice. On injectera donc le courant dans un sens pour une valeur positive de cette force électromotrice et dans l'autre sens pour une valeur négative de la force électromotrice, de sorte que la puissance, produit de la force électromotrice par le courant, soit dans tous les cas positive. Dans le cas d'une injection unidirectionnelle, correspondant à l'exemple proposé, seules les alternances positives seront injectées.

Du fait de l'inductance du moteur, le courant est en retard de phase par rapport à la tension d'entrée.

Par ailleurs, l'établissement du courant est fonction de l'inductance et de la valeur de la tension d'entrée. Plus cette valeur de tension est importante, plus l'établissement du courant est rapide (dérivée temporelle du courant plus importante).

Dès lors, si la tension d'entrée est variable, ou du moins fluctuante, comme précédemment mentionné, par exemple par la présence d'un filtre d'entrée moins efficace, le courant s'établira avec une vitesse augmentant avec la valeur de cette tension.

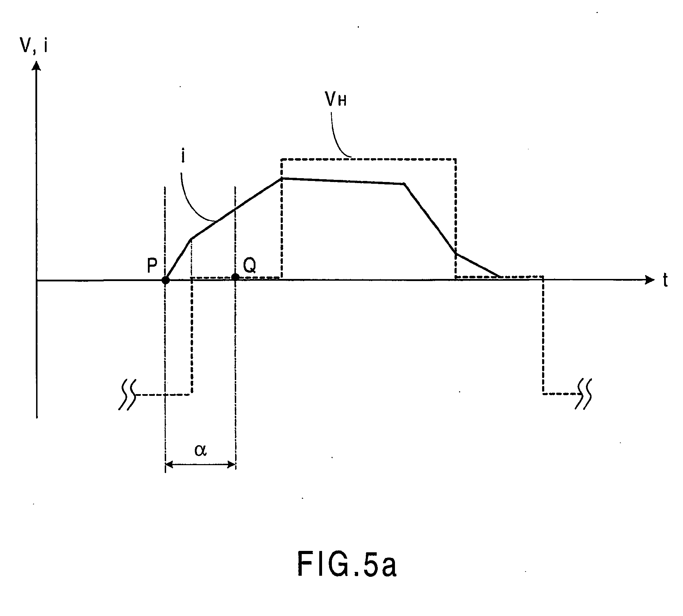

La figure 5a illustre la définition de l'angle de phase dans le cas de figure considéré, entre le courant i et la tension V_{H} représentative de la force électromotrice. Cet angle de phase est déterminé entre les points P et Q, le point P correspondant au début de l'injection du courant i, le point Q étant représentatif du passage par zéro de la force électromotrice. Compte tenu que la tension V_{H} est en créneau, le point Q est défini arbitrairement au milieu de l'intervalle de temps pendant lequel le signal V_{H} est nul.

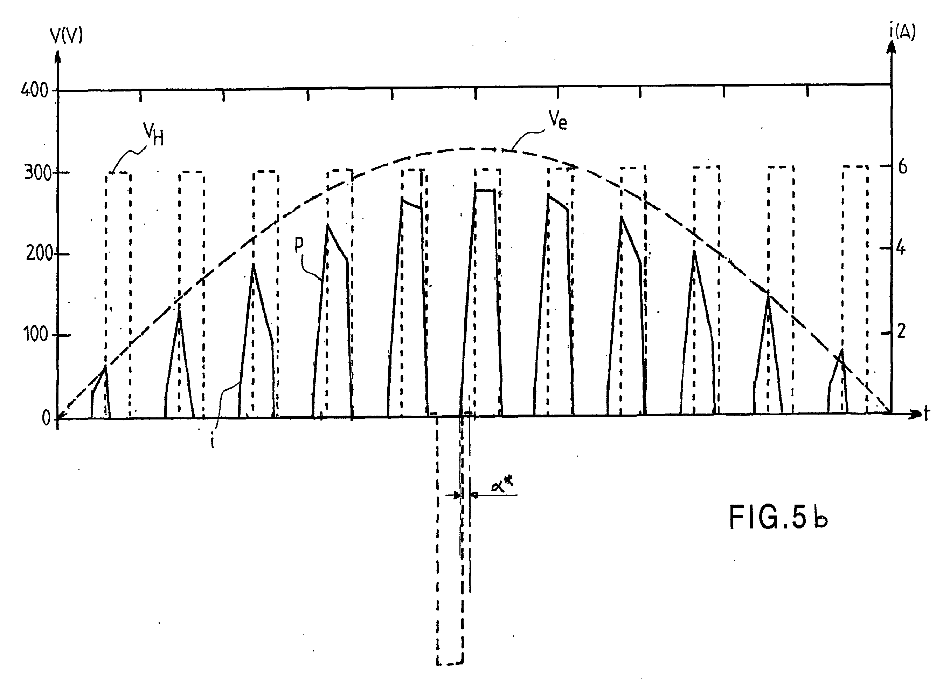

La figure 5b représente, pour une certaine vitesse du rotor, sur une demi-période de la tension d'entrée, Vₑ, sinusoïdale, indiquée en pointillés longs, la tension V_{H} représentative de la force électromotrice, en pointillés courts, ainsi que l'allure du courant i injecté, en trait plein, dans une configuration où l'angle d'avance α* du courant i est constant. Pour la lisibilité de la figure, seules les parties positives de V_{H} ont été présentées. Une alternance négative a toutefois été représentée afin d'illustrer la détermination de l'angle d'avance de phase.

La dérivée temporelle p du courant i augmentant avec la valeur de la tension d'entrée Vₑ, l'angle d'avance α* étant constant, il s'ensuit que le courant atteint des valeurs importantes lorsque la tension est maximale, pouvant dépasser le courant de démagnétisation, si le champ coercitif des aimants est atteint.

Cette situation conduit à surdimensionner le moteur pour qu'il accepte ces pics de courant, ou nécessite des dispositifs spécifiques de limitation du courant. Cette situation conduit à surdimensionner les aimants et le moteur afin que le champ coercitif des aimants ne soit pas atteint lors de ces pics (la limite du champ coercitif est plus haute lorsque les aimants sont plus gros).

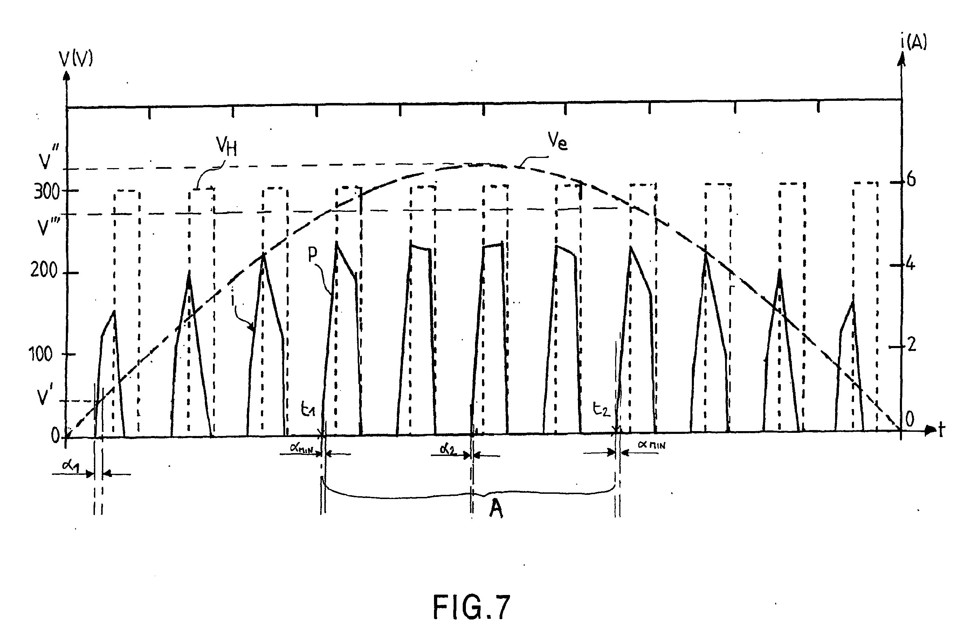

Selon la présente invention, illustrée figure 7 représentant les mêmes variables qu'à la figure 5, l'angle d'avance entre le courant et la tension est rendu variable. L'angle d'avance est d'autant plus important que la valeur de la tension est faible, afin de compenser la pente p faible.

Ainsi, l'angle d'avance α₁, correspondant à une tension V', est supérieur à l'angle α₂, pour une tension V", V" étant supérieure à V'. Lorsque la tension est supérieure à V"', l'angle d'avance est alors inférieur à α_{MIN}, afin de limiter les pics de courant.

Globalement, ce principe a pour conséquence de réduire les pics de courant fort et d'augmenter les pics de courant faible. Par suite, les pulsations à deux fois la fréquence réseau sont réduites, tout comme les échauffements du moteur et des composants, notamment les composants de puissance de commande du moteur.

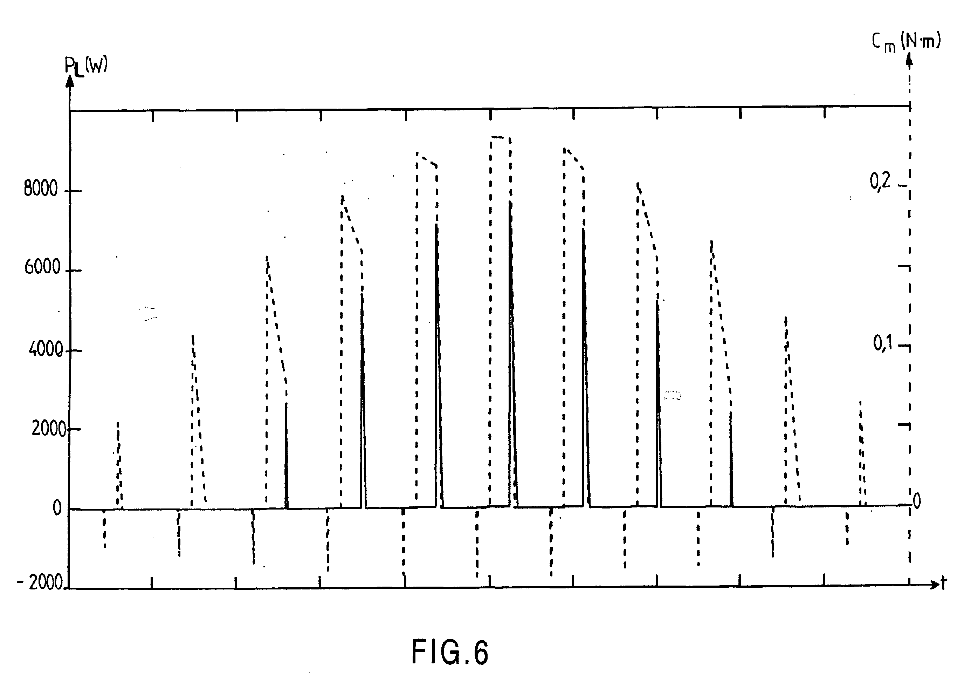

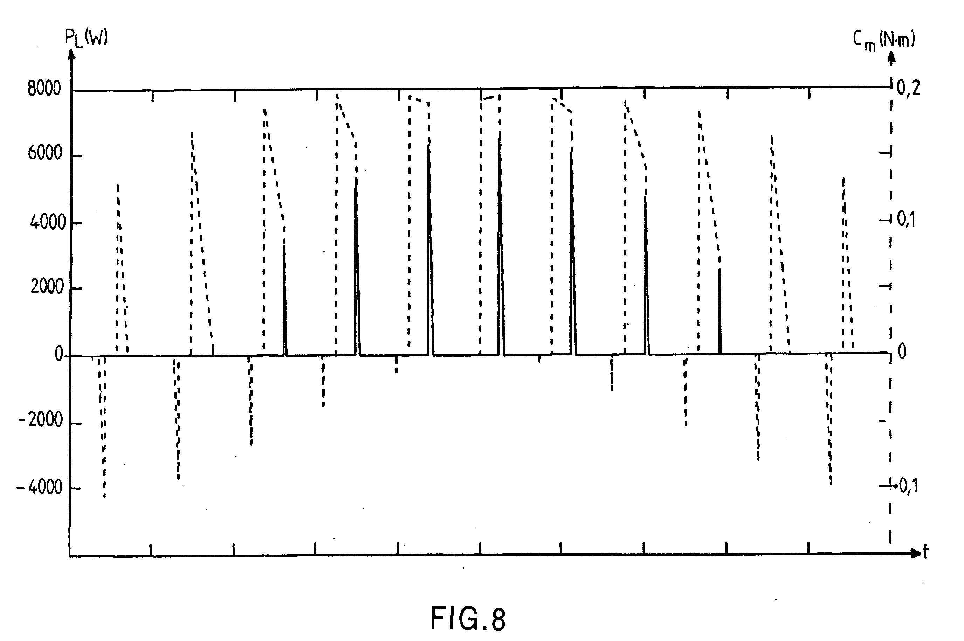

Les figures 6 et 8 présentent le couple moteur Cₘ (en traits pointillés) et les pertes P_{L} (en traits pleins) dues à la dissipation de l'énergie stockée sur le bobinage au moment de la commutation (arrêt du courant) sur la diode D_{ZA}. Pour la figure 6, l'avance de phase est constante, alors que l'avance de phase est variable sur la figure 8, les autres caractéristiques de fonctionnement étant identiques afin de pouvoir comparer les deux comportements.

Cette comparaison fait apparaître clairement que le fait d'avoir rendu l'avance de phase variable et dépendante de la tension d'entrée, a diminué les pertes dues à l'énergie stockée dans les inductances au moment de la commutation. Dans la variante du schéma électronique présenté, ces pertes sont dissipées dans les diodes Zener. Le tableau suivant présente, à titre d'exemple, pour un moteur 3 phases, en excitation unidirectionnelle, les valeurs de courant maximum, pertes Zéner et puissance totale, selon que l'avance de phase est variable ou non.

| | **Avance de phase fixe** | **Avance de phase variable** |
|---|---|---|
| Puissance | 743 W | 755 W |
| Pertes Zéner | 63 W | 50 W |
| Courant maximum | ∼ 5 A | ∼4 A |

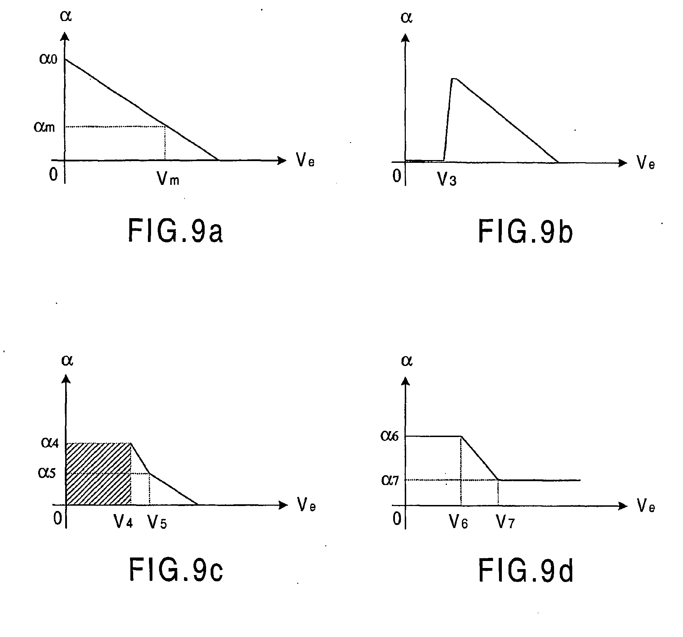

Les figures 9a à 9d montrent différentes relations liant l'angle d'avance de phase à la tension d'entrée. La figure 9a présente une relation linéaire entre ces deux variables depuis une valeur de Vₑ nulle correspondant à un angle de phase α₀, jusqu'à une valeur Vₘ correspondant à un angle de phase αₘ. Cette relation à l'avantage d'une mise en oeuvre simple.

La figure 9b induit une zone où l'avance de phase est nulle pour les faibles tensions d'entrée, jusqu'à une tension V₃. Ceci permet de simplifier la coordination de l'angle de phase avec la tension d'entrée, en ne proposant une variation qu'à partir d'une certaine valeur de la tension d'entrée.

La figure 9c interdit l'injection de courant pour les faibles valeurs de tension Vₑ d'entrée inférieure à V₄, puis une relation linéaire entre V₄ et V₅, l'angle de phase variant entre α₄ et α₅, la relation étant modulée pour les fortes valeurs de Vₑ.

En effet, il peut être avantageux, au niveau du bilan énergétique, de ne pas injecter de courant lorsque la tension d'entrée est trop faible.

La figure 9d est une autre variante présentant deux zones où l'angle d'avance de phase est constant et prend une valeur α₆ pour des tensions d'entrée inférieures à V₆ et une valeur α₇ plus faible que α₆ pour des tensions d'entrée supérieures à V₇. Une zone de transition sépare les deux zones à angle de phase constant, ladite zone pouvant être linéaire ou non.

Ces quatre exemples donnent une idée du type de relation pouvant lier l'angle d'avance à la tension d'entrée sans limiter la portée des revendications à ces quatre types de relation.

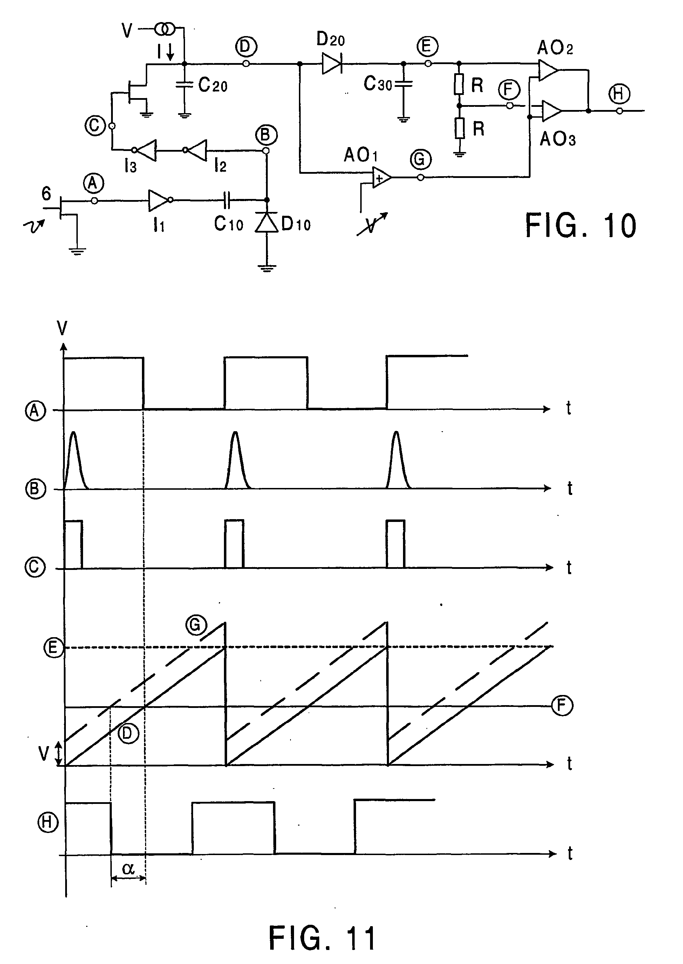

La dépendance de l'angle de phase avec la tension d'entrée est réalisée, selon un mode de réalisation préféré, à l'aide d'un circuit analogique, présenté figure 10. La présente invention n'est cependant pas limitée à ce seul mode de réalisation, donné à titre d'illustration de l'invention.

La figure 11 illustre les différents signaux présents sur le circuit envisagé.

Sur ce schéma, au moins un capteur à effet Hall 6, (un capteur sur chaque phase peut être envisagé) est placé dans le flux magnétique du moteur ou d'un aimant auxiliaire et délivre une tension en créneau au point A. Il est connecté à un circuit impulsionnel composé d'un inverseur I₁, suivi d'un condensateur C₁₀ et d'une diode D₁₀ reliée à la masse par son autre extrémité. Le signal présent au point commun B entre le condensateur et la diode est donc impulsionnel, les impulsions étant à la même fréquence que les signaux issus du capteur, reflet de la force électromotrice du moteur.

Ce signal est alors mis sous forme d'un signal en créneaux au point C, à l'aide de deux bascules I₂ et I₃.

Ces impulsions déchargent le condensateur C₂₀ chargé par la source de courant I, à travers le MOS générant une rampe de tension en dents de scie au point D du circuit.

De ce signal est gardée la valeur crête à travers la diode D₂₀ au point E. Ce signal est par ailleurs additionné à une tension variable V. La tension V est le reflet de la tension d'entrée Vₑ modifiée de la loi que l'on souhaite obtenir entre l'angle d'avance de phase α et la tension d'entrée Vₑ, telle qu'illustré aux figures 9a à 9d. Le signal additionné est présent au point G et représenté figure 11.

De la comparaison de la valeur au point E, de la valeur moitié au point F, avec la valeur au point G, on obtient le créneau symétrique désiré décalé dans le temps au point H.

Il est donc bien visible que lorsque le niveau du signal V varie, le signal G et la valeur de l'angle de phase α varient. Le signal V est relié à la valeur de la tension d'entrée Vₑ selon une fonction telle que désirée selon le mode de correction que l'on souhaite. On voit donc dans un mode de réalisation particulier, comment l'angle de phase α peut varier selon le niveau de la tension d'entrée Vₑ. On remarque en particulier, qu'en général, l'angle de phase α varie dans le sens inverse de la tension d'entrée Vₑ : lorsque la tension d'entrée Vₑ est forte, la valeur de l'angle de phase α est faible.

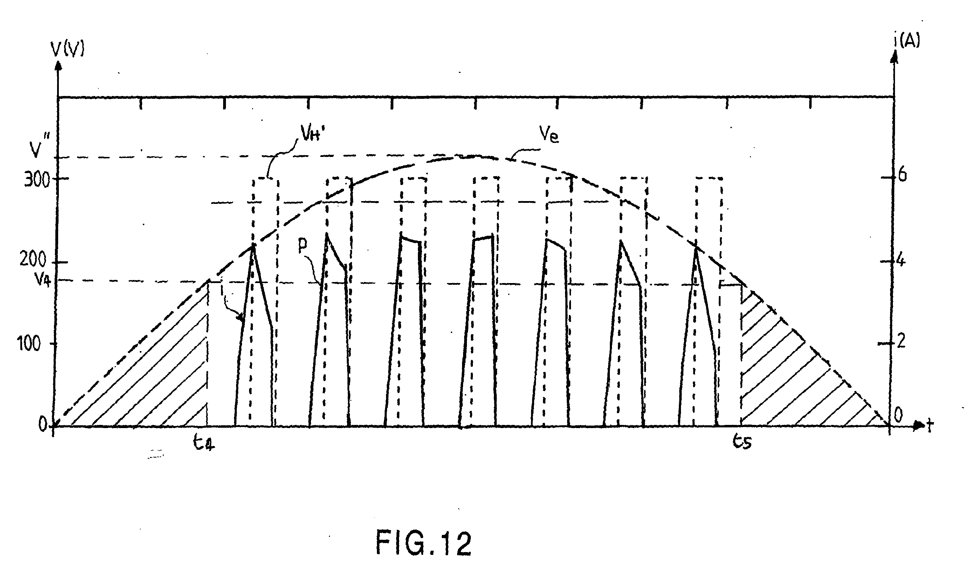

Dans la variante de réalisation illustrée aux figures 9c et 12, il a été choisi de ne pas exciter le moteur lorsque la tension d'entrée Vₑ est trop faible, c'est-à-dire inférieure à une tension seuil V₄. Cette valeur est définie par rapport aux caractéristiques du moteur et de son fonctionnement, et correspond à un bilan énergétique peu favorable, voire défavorable, où les pertes sont importantes, entraînant, par ailleurs, un échauffement du moteur.

Comme visible sur la figure 12, entre les instants t₄ et t₅, la tension d'entrée est supérieure à V₄. Le moteur est alors alimenté. En dehors de cette période, le moteur n'est pas alimenté et peut alors être utilisé en tant que capteur, afin de déterminer la position du rotor / stator, par la tension du générateur, dont les passages par zéro sont les indicateurs pour déterminer l'instant d'injection du courant ainsi que la fréquence d'injection.

On détermine donc, en l'absence d'injection, la fréquence et les instants d'injection du courant, à l'aide du moteur utilisé en tant que capteur, puis, lorsque la tension d'entrée est supérieure à V₄, par interpolation sur l'historique précédent, on fixe les instants d'injection du moteur et la fréquence d'injection, jusqu'à ce que la tension d'entrée redevienne inférieure à V₄, le moteur étant à nouveau utilisé en tant que capteur pour réajuster l'interpolation précédente par des mesures réelles.

Ainsi, sur la figure 12, la tension V_{H}, est une tension simulée, et non pas mesurée par des capteurs, comme précédemment expliqué.

Dans cette configuration, on choisit donc les périodes qui ne sont pas trop pénalisantes pour le moteur, afin d'effectuer les mesures de passage par zéro de la tension, ces données sur le positionnement du rotor / stator étant extrapolées ensuite lorsque le moteur est alimenté. Cette configuration évite l'utilisation de capteurs.

## Revendications

1. Moteur à commutation électronique, tel que notamment un moteur sans collecteur, comportant un dispositif d'alimentation dudit moteur, à partir d'un réseau de tension alternative fluctuante (1), composé notamment d'un pont redresseur (2) connecté au réseau de tension alternative, d'un filtre capacitif connecté en sortie du pont redresseur et constitué d'au moins un condensateur (3) de faible valeur, délivrant une tension dite "d'entrée" (Vₑ), d'un circuit de commande du moteur permettant l'injection d'un courant (i) dans les parties statoriques du moteur, ledit moteur présentant, en fonctionnement, une force électromotrice, la commande pour établir le courant (i) présentant une avance de phase par rapport à ladite force électromotrice dont la valeur, appelée angle d'avance de phase (α) est variable en fonction de la tension d'entrée (Vₑ).

2. Moteur à commutation électronique selon la revendication précédente, **caractérisé en ce que** le condensateur (3) du filtre capacitif est un condensateur plastique.

3. Moteur à commutation électronique selon la revendication précédente, **caractérisé en ce que** le condensateur (3) est un condensateur polyester.

4. Moteur à commutation électronique selon l'une des revendications précédentes, **caractérisé en ce que** la valeur de l'angle d'avance (α) est linéaire et inversement proportionnel à la tension d'entrée (Vₑ).

5. Moteur à commutation électronique selon l'une des revendications précédentes, **caractérisé en ce que** le courant (i) est maintenu à une valeur nulle tant que la tension d'entrée (Vₑ) ou le rapport entre la tension d'entrée (Vₑ) et la force électromotrice reste inférieur(e) à une valeur prédéterminée.

6. Moteur à commutation électronique selon l'une des revendications précédentes, **caractérisé en ce que** la valeur de l'angle d'avance (α) est couplée à la valeur de la tension d'entrée (Vₑ) par un dispositif analogique.

7. Moteur à commutation électronique selon l'une des revendications 1 à 5, **caractérisé en ce que** la valeur de l'angle d'avance (α) est couplée à la valeur de la tension d'entrée (Vₑ) par un dispositif numérique.

## Claims

1. A motor with electronic switching, such as in particular a collector-free motor, comprising a device powering said motor from a fluctuating AC voltage system (1), consisting in particular of a rectifier bridge (2) connected to the AC voltage system, a capacitive filter connected in output of the rectifier bridge and consisting of at least a low value capacitor (3), delivering a so-called "input" voltage (Vₑ), of a circuit controlling the motor for injecting a current (i) in the stator parts of the motor, said motor having, in operation, an electromotive force, the control for establishing the current (i) having a phase lead relative to said electromotive force whose value, called phase lead angle (α) varies according to the input voltage (Vₑ).

2. A motor with electronic switching, according to the preceding claim, **characterised in that** the capacitor (3) of the capacitive filter is a plastic capacitor.

3. A motor with electronic switching, according to the preceding claim, **characterised in that** the capacitor (3) is a polyester capacitor.

4. A motor with electronic switching, according to any one of the preceding claims, **characterised in that** the value of the lead angle (α) is linear and inversely proportional to the input voltage (Vₑ).

5. A motor with electronic switching, according to any one of the preceding claims, **characterised in that** the current (i) is maintained at zero value as long as the input voltage (Vₑ) or the ratio between the input voltage (Vₑ) and the electromotive force remains lower than a preset value.

6. A motor with electronic switching, according to any one of the preceding claims, **characterised in that** the value of the lead angle (α) is coupled with the value of the input voltage (Vₑ) by an analogue device.

7. A motor with electronic switching, according to any one of the claims 1 to 5, **characterised in that** the value of the lead angle (α) is coupled with the value of the input voltage (Vₑ) by a digital device.

## Patentansprüche

1. Motor mit elektronischer Kommutierung, insbesondere in der Art eines Motors ohne Kollektor, umfassend eine Vorrichtung für die Stromversorgung des Motors ausgehend von einem fluktuierenden Wechselspannungsnetz (1), insbesondere bestehend aus einer Gleichrichterbrücke (2), die an das Wechselspannungsnetz angeschlossen ist, aus einem kapazitiven Filter, der am Ausgang der Gleichrichterbrücke angeschlossen ist und von mindestens einem Kondensator (3) mit niedrigem Wert gebildet wird, der eine so genannte "Eingangsspannung" (Vₑ) liefert, aus einem Motorsteuerkreis, der die Injektion eines Stroms (i) in die statorischen Teile des Motors ermöglicht, wobei der Motor in Betrieb eine elektromotorische Kraft aufweist, wobei die Steuerung zum Erzeugen des Stroms (i) in Bezug auf die elektromotorische Kraft eine Phasenvoreilung aufweist, deren Wert, der Phasenvoreilwinkel (α) genannt wird, in Abhängigkeit von der Eingangsspannung (Vₑ) variabel ist.

2. Motor mit elektronischer Kommutierung nach dem vorhergehenden Anspruch, **dadurch gekennzeichnet, dass** der Kondensator (3) des kapazitiven Filters ein Kunststoffkondensator ist.

3. Motor mit elektronischer Kommutierung nach dem vorhergehenden Anspruch, **dadurch gekennzeichnet, dass** der Kondensator (3) ein Polyester-Kondensator ist.

4. Motor mit elektronischer Kommutierung nach einem der vorhergehenden Ansprüche, **dadurch gekennzeichnet, dass** der Wert des Phasenvoreilwinkels (α) linear und umgekehrt proportional zur Eingangsspannung (Vₑ) ist.

5. Motor mit elektronischer Kommutierung nach einem der vorhergehenden Ansprüche, **dadurch gekennzeichnet, dass** der Strom (i) auf einem Nullwert gehalten wird, solange die Eingangsspannung (Vₑ) oder das Verhältnis zwischen der Eingangsspannung (Vₑ) und der elektromotorischen Kraft unter einem vorausbestimmten Wert liegen.

6. Motor mit elektronischer Kommutierung nach einem der vorhergehenden Ansprüche, **dadurch gekennzeichnet, dass** der Wert des Phasenvoreilwinkels (α) über eine analoge Vorrichtung an den Wert der Eingangsspannung (Vₑ) gekoppelt ist.

7. Motor mit elektronischer Kommutierung nach einem der Ansprüche 1 bis 5, **dadurch gekennzeichnet, dass** der Wert des Phasenvoreilwinkels (α) über eine digitale Vorrichtung an den Wert der Eingangsspannung (Vₑ) gekoppelt ist.
